# DEMANDE DE BREVET EUROPEEN

(11) **EP 3 598 228 A1**
(43) Date de publication de la demande: **22.01.2020**
(21) Numéro de dépôt: 19184503.1
(22) Date de dépôt: 04.07.2019
(51) Int. Cl.: G03B 17/56, G03B 37/00, G03B 37/04, H04N 5/225, H04N 5/232, H04N 5/247

(54) **DISPOSITIF PORTATIF POUR ACQUERIR DES IMAGES D'UN ENVIRONNEMENT**

(30) Priorité: 17.07.2018 FR 1856591
(71) Demandeur: Soletanche Freyssinet, 92500 Rueil-Malmaison (FR)
(72) Inventeur: PERAZIO, Guy, 38160 SAINT-ROMANS (FR); PERAL, José, 38430 MOIRANS (FR); VALCKE, Serge, 38140 APPRIEU (FR); CHAMBAUD, Luc, 38430 MOIRANS (FR)
(74) Mandataire: Nony

(57) **Abrégé**

Dispositif (5) portatif pour acquérir des images d'un environnement, notamment d'une galerie (85), le dispositif comportant un module d'acquisition (10) comportant une canne (12) et au moins deux étages d'acquisition (25a-c) disposés à des hauteurs différentes sur la canne, chaque étage d'acquisition comportant une pluralité de caméras (20) configurées pour acquérir chacune une image de la scène, les axes de vue (27) des caméras d'un étage d'acquisition étant répartis angulairement autour de l'axe de la canne de sorte que les images acquises se recoupent angulairement.

## Description

La présente invention concerne un dispositif d'acquisition d'images, notamment en vue de réaliser un modèle numérique géoréférencé d'une installation souterraine, et un procédé de réalisation d'un tel modèle numérique.

L'intervention, par exemple à des fins de maintenance, dans les galeries d'une installation souterraine, par exemple un réseau d'égouts, est généralement rendue complexe par l'exiguïté des galeries, l'humidité et la pénombre qui y règnent. La progression des opérateurs dans les galeries s'avère donc bien souvent lente et leur travail y est compliqué.

Afin d'anticiper les difficultés et d'optimiser les conditions de l'intervention, une connaissance précise de la topographie de l'installation souterraine est nécessaire. En particulier, il s'agit de répertorier précisément, préalablement à l'intervention, la position de zones spécifiques dans l'installation souterraine, par exemple là où les galeries sont rétrécies, le long d'un itinéraire partant d'un accès en surface jusqu'à l'emplacement de l'intervention. Par exemple, les zones de rétrécissement résultent d'une diminution de la distance entre les parois d'une galerie, ou d'un encombrement de la galerie par les canalisations et/ou câbles qui y sont disposés.

En outre, dans de nombreuses métropoles, la longueur totale des galeries des réseaux d'égouts est typiquement supérieure à mille kilomètres. Des plans de ces réseaux existent, mais ils sont bien souvent incomplets. En effet, de nombreuses modifications des galeries ont pu être réalisées au fil des années, voire des siècles passés, sans toutefois toujours être référencées précisément sur les plans. En outre, ces derniers ne fournissent une information qu'en deux dimensions, ce qui ne permet pas de déterminer précisément la position des zones d'intérêt pour l'intervention des opérateurs. La connaissance des réseaux d'égouts n'est donc souvent que partielle.

Il existe par conséquent un besoin pour réaliser un modèle numérique 3D d'une installation souterraine, de préférence géoréférencé dans un référentiel absolu, de sorte à faciliter les interventions dans cette installation souterraine, laquelle est par exemple un réseau d'égouts.

L'invention vise à répondre à ce besoin, et propose à cet effet un dispositif portatif pour acquérir des images d'une scène, le dispositif comportant un module d'acquisition comportant une canne et au moins deux étages d'acquisition disposés à des hauteurs différentes sur la canne, chaque étage d'acquisition comportant une pluralité de caméras configurées pour acquérir chacune une image de la scène, les axes de vue des caméras d'un étage d'acquisition étant répartis angulairement autour de l'axe de la canne de sorte que les images acquises se recoupent angulairement.

L'opérateur se déplaçant dans un environnement, par exemple une galerie, notamment d'une installation souterraine, peut ainsi acquérir une pluralité d'images d'une scène de l'environnement au moyen du dispositif d'acquisition. Par la suite, en corrélant numériquement les images acquises à l'aide d'une méthode bien connue de l'homme du métier, telle que la photogrammétrie, un modèle 3D élémentaire de chaque scène acquise peut être établi. En progressant à travers l'environnement, de manière à acquérir des scènes continues les unes aux autres, puis en assemblant les modèles numériques élémentaires, un modèle numérique 3D continu de l'environnement peut ainsi être généré.

Par « scène », il faut comprendre la partie de l'environnement pouvant être observé par le dispositif lorsque celui-ci est immobile à un emplacement donné.

De préférence, la canne est adaptée à être portée par un opérateur se déplaçant dans la galerie et comporte en partie inférieure un pied permettant de la poser sur le sol lors de l'acquisition des images.

En variante, le dispositif, en particulier la canne, peut comporter un organe de fixation pour monter le dispositif sur un appareil, notamment un véhicule, un engin de lavage, ou un avion, ou un drône. Il peut être mobile en déplacement par rapport à l'appareil. L'appareil peut comporter un moyen de guidage du dispositif. Par exemple, l'appareil peut comporter un rail sur lequel le dispositif est mobile en translation au moyen d'un treuil. Le rail peut être déployable, par exemple de manière télescopique. La longueur déployée du rail peut être supérieure ou égale à 3 m, par exemple supérieure ou égale à 5 m. Le rail peut par exemple être introduit par un trappon d'égout et être déployé dans le regard situé sous le trappon. Le dispositif peut être déplacé le long du rail dans le regard à acquérir des scènes du regard.

De préférence, les axes de vue des caméras d'un étage d'acquisition sont répartis angulairement autour de l'axe de la canne de sorte que les images acquises par deux caméras angulairement consécutives d'un étage se recoupent angulairement.

Le recouvrement des images permet leur traitement ultérieur par corrélation d'images, notamment par photogrammétrie.

De préférence, le recouvrement angulaire entre des images acquises par deux caméras consécutives d'un étage est supérieur à 70 %, voire supérieur à 80 %, par exemple supérieur à 90 %. Le recouvrement angulaire peut être calculé :
- optionnellement, en projetant une image acquise par l'une des caméras dans un plan dont une normale est parallèle à l'axe de vue de l'autre caméra, puis
- en appariant, par exemple par corrélation d'images, l'image, optionnellement projetée, et l'autre image acquise par l'autre caméra, de manière déterminer la zone commune entre l'image, optionnellement projetée, et l'autre image, et
- en exprimant en pourcentages, le rapport du nombre de pixels de la zone appariée sur le nombre de pixels de l'autre image.

Par exemple, l'étape de projection décrite ci-dessus est effectuée lorsque l'angle entre les axes de vues des deux caméras consécutives est supérieur à 5°.

De préférence, le dispositif comporte au moins trois étages d'acquisition. On améliore ainsi l'acquisition de l'environnement en augmentant le nombre de points de vue. Par traitement photogrammétrique des images ainsi acquises, la précision du calcul des coordonnées géométriques du modèle 3D élémentaire de chaque scène vue par le dispositif est améliorée. De préférence, le dispositif comporte trois étages d'acquisition, ce qui confère un optimum entre précision du modèle 3D élémentaire et durée du traitement photogrammétrique.

De préférence, les caméras de chaque étage sont réparties régulièrement autour de l'axe longitudinal de la canne.

De préférence, les caméras de chaque étage sont réparties autour de l'axe longitudinal de la canne, sur un secteur angulaire total compris entre 90° et 210°, de préférence compris entre 150° et 190°, en particulier égal à 180°. On assure alors une acquisition angulairement homogène des images. Lors du traitement photogrammétrique, on peut ainsi limiter les artefacts de corrélation des images liés à une distribution spatiale hétérogène des informations à traiter. L'angle mesuré autour de l'axe longitudinal, entre deux axes de vue de caméras angulairement consécutives, peut être compris entre 90° et 110°.

Les caméras des différents étages d'acquisition peuvent être réparties selon une distribution angulaire identique.

De préférence, l'espacement entre les étages d'acquisition est réglable. Par exemple, lorsque le dispositif est mis en oeuvre dans une galerie, il est ainsi possible d'adapter la configuration de prise de vue en fonction de la forme et/ou de l'exiguïté de la galerie. L'espacement entre deux étages d'acquisition consécutifs, mesuré le long de l'axe longitudinal de la canne, peut être compris entre 0,4 m et 0,8 m. Par ailleurs, la longueur maximale de la canne est de préférence inférieure à 2,5 m, de préférence inférieure à 2 m, voire inférieure à 1,2 m. En particulier, la canne peut être télescopique, notamment dans sa partie située sous les étages de caméra. Sa longueur peut ainsi être modifiée au cours de la progression dans la galerie, en fonction de la variation locale de hauteur sous voûte.

Les étages d'acquisition peuvent être mobiles en translation et/ou en rotation les uns par rapport aux autres. En particulier, ils peuvent être mobiles en translation seulement les uns par rapport aux autres, afin d'être immobilisés avec l'écartement souhaité.

De préférence, les caméras d'un étage d'acquisition sont fixes les unes par rapport aux autres. De préférence, selon une configuration du dispositif, les caméras de chacun des étages d'acquisition sont fixes les unes par rapport aux autres.

Les caméras d'un étage d'acquisition peuvent être disposées dans un même plan, de préférence normal à l'axe de la canne. En particulier, les axes de vue des caméras de l'étage peuvent être disposés dans le même plan. Les axes de vue des caméras d'un étage peuvent présenter une intersection commune, notamment en un point situé sur l'axe longitudinal de la canne. Dans une variante, ils peuvent former les génératrices d'un cône de révolution dont l'axe est colinéaire avec celui de la canne.

Par ailleurs, deux caméras de deux étages d'acquisitions différents peuvent présenter des axes de vue contenus dans un plan contenant l'axe de la canne.

De préférence le module d'acquisition comporte de préférence au moins six, de préférence au moins dix, de préférence au moins douze, par exemple quinze caméras. Au moins un des étages d'acquisition peut comporter au moins trois, de préférence au moins quatre, notamment cinq caméras. De préférence, les étages d'acquisition comportent un nombre de caméras identique. On assure ainsi une acquisition homogène des images sur toute la hauteur du module d'acquisition.

De préférence, les caméras d'au moins un étage d'acquisition sont identiques, de manière à simplifier le traitement photogrammétrique des images.

Une caméra est un appareil d'acquisition d'images numériques. L'appareil d'acquisition d'images peut acquérir un film en continu, formé de séquences d'images. Il peut aussi ou en variante acquérir des images photographiques. Par exemple, la caméra peut être une caméra portative, par exemple de marque GoPro. Elle peut être un appareil photographique, par exemple de type réflex. La caméra peut être amovible afin d'être rétirée du module d'acquisition. Par exemple, en fonction des dimensions de l'environnement, par exemple une galerie à imager, les caméras montées sur la canne peuvent être remplacées par d'autres caméras ayant un objectif de distance focale différente. Chaque caméra peut comporter un autofocus. Les ouvertures des caméras peuvent être les mêmes, et varier de concert ou s'adapter automatiquement à la lumière reçue. Les caméras peuvent présenter des distances focales différentes ou, de préférence, identiques.

Chaque caméra peut être configurée pour générer une image numérique dans un format de données d'image standard, par exemple choisi parmi le jpeg, le png, le tiff, le raw et le bmp, ou pour générer un film, par exemple au format standard choisi parmi l'avi, le mpeg et le mkv, duquel peut être extrait une séquence chronologique d'images.

De préférence, afin de protéger les caméras, au moins un et de préférence tous les étages d'acquisition, comportent chacun un boîtier dans lequel les caméras de l'étage d'acquisition sont logées.

De préférence, les boîtiers sont à distance les uns des autres.

De préférence, l'espacement entre les boîtiers est réglable.

Par ailleurs, le dispositif d'acquisition pouvant être destiné à opérer dans une galerie d'une installation souterraine généralement obscure, le module d'acquisition comporte de préférence une pluralité de lampes pour éclairer la scène. Les lampes sont notamment configurées pour éclairer la scène au moins lors de l'acquisition des images.

De préférence, la puissance lumineuse maximale d'au moins un, de préférence de chaque lampe, est supérieure à 900 lumen, de préférence supérieure à 1200 lumen.

De préférence, les lampes sont réparties, de préférence de manière régulière, autour de l'axe de la canne de sorte que chaque partie de la scène vue par une caméra soit éclairée lors de l'acquisition des images de la façon la plus homogène possible.

Au moins un et de préférence tous les étages d'acquisition comportent des lampes. En particulier, au moins deux et de préférence tous les étages d'acquisition comportent le même nombre de lampes. Par exemple, au sein d'un étage d'acquisition, chaque lampe est disposée entre deux caméras adjacentes.

De préférence, les lampes sont identiques et émettent toutes une lumière présentant un spectre et une intensité identiques.

Les lampes peuvent être configurées pour produire un flash lumineux lors de l'acquisition d'images et/ou pour produire un éclairage en continu, et de préférence d'intensité constante.

La température de couleur peut varier de 5000 K à 5500 K par exemple.

De préférence, les lampes sont à base de diodes électroluminescentes.

Les lampes peuvent être logées dans le boîtier.

Par ailleurs, le dispositif peut comporter une unité de déclenchement connectée à au moins deux, de préférence à toutes les caméras, et optionnellement aux lampes, et configurée pour déclencher l'acquisition des images. L'unité de déclenchement peut être connectée aux caméras par un câble électrique ou au moyen d'une liaison sans fil, par exemple de type Bluetooth.

L'unité de déclenchement peut être configurée pour déclencher une acquisition synchrone ou quasi-synchrone des images, c'est-à-dire que le décalage temporel entre les déclenchements de toutes les caméras du module d'acquisition suite au déclenchement est inférieur à 100 ms.

Par ailleurs, l'unité de déclenchement peut comporter un bouton poussoir qui, lorsqu'actionné par l'opérateur, commande l'acquisition des images. La canne peut comporter une poignée de préhension, sur laquelle peut être monté le bouton poussoir.

Dans une variante, le module d'acquisition comporte l'unité de déclenchement, qui peut être montée sur la canne ou sur un étage d'acquisition.

De préférence, le module d'acquisition présente une masse inférieure à 15 kg, mieux inférieure à 10 kg. Ainsi, le dispositif peut être porté par un opérateur qui peut le déplacer de scène en scène sans l'aide d'un dispositif de manutention.

Par ailleurs, le dispositif peut comporter une unité d'alimentation électrique, de préférence comportant une batterie rechargeable et par exemple amovible, pour alimenter électriquement le module d'acquisition. En particulier, l'unité d'alimentation peut alimenter électriquement les caméras et les lampes et/ou l'unité de déclenchement.

Le dispositif peut comporter une unité de stockage, par exemple un disque dur ou une carte SD, configurée pour recevoir et stocker les images numériques en provenance des caméras. L'unité de stockage peut être connectée par un câble ou par une liaison sans fil, par exemple une liaison WiFi, aux caméras.

Par ailleurs, le dispositif peut comporter un harnais adapté à être porté, préférence sur le dos, par l'opérateur lors du déplacement du module d'acquisition dans l'environnement, notamment une galerie.

L'unité de stockage et/ou l'unité de déclenchement et/ou l'unité d'alimentation peuvent être montées sur le harnais ou logées dans un sac monté sur le harnais.

Le dispositif peut comporter une pluralité de caméras arrière montées sur le harnais, et disposées de telle sorte que lorsque le harnais est porté par l'opérateur et que ce dernier regarde devant lui, les axes de vue des caméras arrière soient orientés selon une direction sensiblement opposée à la direction d'observation de l'opérateur. Ainsi, lorsque l'opérateur déplace le module d'acquisition dans l'environnement, par exemple une galerie, pour acquérir la scène qu'il observe devant lui, les caméras arrière acquièrent la scène déjà acquise à l'emplacement précédent, mais selon d'autres points de vue. Les caméras arrière facilitent ainsi l'assemblage des modèles élémentaires numériques générés par photogrammétrie en deux emplacements consécutifs.

De préférence, les caméras arrière sont reliées à l'unité de déclenchement et leurs déclenchements sont synchronisés avec le déclenchement des caméras du module d'acquisition.

De préférence, le dispositif comporte une pluralité de lampes arrière, montées sur le harnais, et agencées de manière à éclairer la scène vue par les caméras arrière.

Par ailleurs, le dispositif peut en outre comporter un système de géolocalisation par satellite, par exemple de type GPS à précision améliorée, afin de géoréférencer dans un référentiel absolu l'emplacement d'une acquisition, lorsque le dispositif est à ciel ouvert. Le système de géolocalisation peut être monté sur le module d'acquisition.

Par « référentiel absolu » on désigne un référentiel géodésique dans lequel on peut définir la localisation d'un objet sur terre de manière univoque. Son centre est par exemple proche du barycentre de la terre, ses deux premiers axes sont dans le plan de l'équateur et son troisième axe est proche de l'axe de rotation de la terre. Le référentiel absolu pouvant être utilisé dans le cadre de la présente invention est de préférence choisi parmi les suivants : Réseau Géodésique Français 1993 (RGF93), World Geodetic System (WGS84), International Terrestrial Rotational Service (ITRS) ou European Terrestrial Reference System (ETRS).

Par ailleurs, l'invention concerne une méthode d'acquisition d'une scène, de préférence d'au moins une galerie, de préférence d'une installation souterraine, comportant une étape d'acquisition selon laquelle on positionne la canne sensiblement verticalement, puis on déclenche l'acquisition d'au moins une scène au moyen du dispositif

De préférence, la méthode d'acquisition comporte le déplacement du dispositif en une pluralité d'emplacements, et en chaque emplacement, la mise en oeuvre de l'étape d'acquisition, les emplacements étant choisis de sorte que les scènes acquises en deux emplacements consécutifs se recoupent.

Les emplacements peuvent être situés le long d'un itinéraire de préférence parcouru en sens unique. La longueur de cet itinéraire peut être supérieure à 10 m, voire supérieure à 100 m, voire supérieure à 1 km.

En particulier, les emplacements peuvent être disposés le long d'un itinéraire parcourant plusieurs galeries interconnectées d'un réseau souterrain.

L'invention concerne encore un procédé de réalisation d'un modèle numérique 3D géoréférencé, dans un référentiel absolu, d'une installation souterraine,
l'installation souterraine comportant au moins une galerie souterraine et au moins un regard débouchant inférieurement dans la galerie et à la surface par un accès, le procédé comportant les étapes de:
a) déplacement dans la galerie et le regard d'au moins un dispositif d'acquisition d'images, de préférence un dispositif tel que défini ci-dessus, avec au cours du déplacement du dispositif, l'acquisition de scènes se recoupant, au moins une scène incluant au moins un élément de référence géoréférencé dans le référentiel absolu situé au niveau de l'accès ou introduit dans le regard,
b) création d'un modèle élémentaire 3D de chaque scène imagée par le dispositif,
c) assemblage des modèles élémentaires 3D pour réaliser un modèle 3D continu de la galerie et du regard,
d) géoréférencement dans le référentiel absolu du modèle 3D continu grâce à la position préalablement géoréférencée, dans le référentiel absolu, dudit élément de référence.

Chaque emplacement spécifique de la galerie et du regard peut ainsi être géoréférencé précisément. Par extension, un modèle 3D continu de l'installation souterraine peut être généré et géoréférencé précisément. Ainsi, dans une variante où l'installation souterraine est un réseau d'égouts et les accès au réseau d'égouts sont définis par des trappons d'égouts, le modèle 3D continu permet de simplifier la planification de l'intervention dans la galerie, en partant d'un emplacement géoréférencé en surface.

L'installation souterraine peut être choisie parmi un réseau d'égouts, une mine, un réseau ferré métropolitain, un réservoir d'eau et un autre ensemble industriel. De préférence, l'installation souterraine est un réseau d'égouts.

De préférence, le regard s'étend verticalement depuis l'accès jusqu'à la galerie. La galerie peut s'étendre selon une direction sensiblement horizontale.

De préférence, à l'étape a) le déplacement s'effectue, au moins dans la galerie, selon un itinéraire en sens unique, ce qui simplifie la mise en oeuvre du procédé.

A l'étape a), on peut déplacer le dispositif d'acquisition dans plusieurs galeries interconnectées et/ou dans plusieurs regards débouchant inférieurement dans la ou les galeries et en surface par des accès espacés les uns des autres. En particulier, on peut déplacer le dispositif à travers plus de deux galeries interconnectées, par exemple plus de trois galeries interconnectées.

Par ailleurs, la galerie peut présenter une hauteur comprise entre 1,5 m et 3 m et/ou une largeur comprise entre 0,6 m et 5 m et/ou une longueur comprise entre 1 m et 100 m.

A l'étape a), on peut acquérir au moins deux scènes incluant chacune au moins un élément de référence géoréférencé dans le référentiel absolu et situé au niveau de chacun des deux accès respectifs ou introduit dans chacun des deux regards respectifs.

La distance moyenne entre deux emplacements consécutifs précités est par exemple comprise entre 30 m et 100 m.

De préférence, la création de chaque modèle numérique élémentaire à l'étape b) est effectuée par photogrammétrie, en corrélant numériquement plusieurs images, de préférence la totalité des images acquises à l'emplacement correspondant. A cette fin, on peut mettre en oeuvre le logiciel PhotoScan édité par la société Agisoft. L'assemblage à l'étape c) peut être réalisé de la même façon.

De préférence, à l'étape d) le géoréférencement dans le référentiel absolu du modèle 3D continu est opéré grâce aux positions préalablement géoréférencées, dans le référentiel absolu, d'au moins un et mieux de plusieurs éléments de référence, chacun situés au niveau d'un accès ou dans un regard. Ainsi, en utilisant différentes positions connues, préalablement géoréférencées, en surface d'éléments de référence disposés au niveau d'accès ou de regards espacés les uns des autres, on peut corriger les erreurs potentielles lors de l'assemblage du modèle 3D continu et améliorer la précision de son géoréférencement dans le référentiel absolu.

De préférence, l'élément de référence est au moins une portion d'un trappon amovible d'égouts, obturant l'accès. Par exemple, l'élément de référence est le centre du trappon d'égouts dans la configuration où le trappon obture l'accès.

Le modèle 3D continu, obtenu en fin d'étape d), comporte un ensemble de points dont les coordonnées géométriques représentent virtuellement la galerie et l'accès. Les coordonnées géométriques peuvent être géoréférencées, dans le référentiel absolu, avec une précision inférieure à 20 mm, de préférence inférieure à 10 mm, par exemple de l'ordre de 5 mm.

Le modèle 3D continu peut comporter en outre, associée à chaque coordonnée géométrique d'un point de la galerie ou de l'accès, la couleur en ce point.

Par ailleurs, le procédé peut comporter la visualisation du modèle 3D continu sur un écran, avec restitution de perspectives, ou en vision stéréoscopique, ou en réalité augmentée. En particulier, la visualisation du modèle 3D continu peut comporter l'affichage d'au moins un objet virtuel choisi parmi une paroi d'une galerie ou du regard, une canalisation disposée dans la galerie ou dans le regard, un accès à la surface, une ouverture connectant deux galeries entre elles, une échelle, une pompe-clapets. La visualisation, notamment en couleur, du modèle 3D continu permet ainsi d'identifier plus aisément les zones de la galerie dans lesquelles une intervention doit être planifiée.

De préférence, le procédé comporte la création d'une modélisation 3D continue d'une portion routière disposée entre deux regards débouchant dans la galerie et comportant les éléments de référence situés au niveau de chacun des deux accès correspondants ou introduits dans chacun des deux regards respectifs, et le géoréférencement d'une modélisation 3D continue de la portion routière dans un référentiel absolu. Ainsi, le modèle 3D continu de la galerie et des regards peut être assemblé avec la modélisation 3D continue de la portion routière. Par exemple, dans la variante où l'installation souterraine est un réseau d'égouts et la portion routière est une rue ou un ensemble de rues d'une ville, on peut identifier aisément la topographie souterraine associée à une position spécifique dans la rue.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique en perspective un exemple de module d'acquisition d'un dispositif selon l'invention,
- la figure 2 illustre un exemple de harnais selon l'invention,
- la figure 3 présente de façon schématique les étapes de l'invention,
- la figure 4 illustre de manière schématique un exemple de mise en oeuvre du procédé de réalisation d'un modèle numérique 3D géoréférencé,
- la figure 5 présente un exemple d'image d'une scène d'une galerie,
- la figure 6 est un exemple de représentation tridimensionnelle d'un modèle 3D élémentaire construit à partir d'une pluralité d'images, et
- les figures 7 à 9 sont des exemples de visualisation sur écran d'un modèle 3D continu géoréférencé, obtenu par assemblage de modèles élémentaires tels qu'illustrés sur la figure 6.

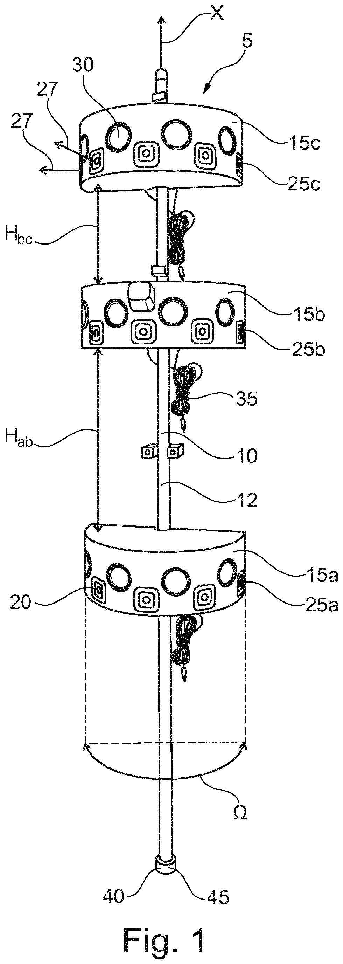

Le dispositif 5 selon l'invention, illustré sur la figure 1, comporte un module d'acquisition 10 pour acquérir des images.

Le module d'acquisition comporte une canne 12 d'axe longitudinal X et une pluralité de boîtiers 15a-c, en l'occurrence trois boîtiers, montés sur la canne, et séparés par une distance H_{ab}, H_{bc} les uns des autres le long de l'axe X. Les boîtiers présentent chacun une forme générale hémicylindrique, par exemple de hauteur et de rayon respectivement égaux à 20 cm et 15 cm environ.

Des caméras 20 sont logées dans chaque boîtier, définissant ainsi des étages d'acquisition 25a-c disposés à des hauteurs différentes sur la canne 12. L'espacement entre deux étages de caméras consécutifs est réglable et peut être fixé à une valeur choisie par l'utilisateur.

Les caméras de chaque étage d'acquisition sont disposées angulairement autour de l'axe X sur un secteur angulaire total d'angle Ω égal à 180°, de manière à couvrir largement la scène à imager. Cette valeur n'est pas limitative.

Les axes de vue 27 des caméras d'un même étage d'acquisition sont répartis angulairement autour de l'axe X de la canne 12 de sorte que les images acquises se recoupent angulairement.

Les caméras de chaque étage d'acquisition sont disposées régulièrement autour de l'axe X sur le secteur angulaire total d'angle Ω. Dans l'exemple de la figure 1, les étages d'acquisition comportent un nombre identique de caméras et les caméras sont agencées de la même façon à chaque étage, deux caméras de même rang ayant des axes de vue coplanaires.

Les caméras de chaque étage sont par ailleurs disposées de sorte que leur axes de vue soient contenus dans un même plan perpendiculaire à l'axe X.

Dans l'exemple de la figure 1, les caméras sont des appareils vidéo de marque GoPro dont l'objectif, découchant à la périphérie du boîtier dans lesquelles elles sont logées est de focale 3 et d'ouverture 2,8.

Le module d'acquisition comporte par ailleurs des lampes 30 à diodes électroluminescentes. Ces lampes sont agencées au sein de chaque étage d'acquisition et logées dans les boîtiers correspondants.

Chaque lampe est par exemple choisie pour émettre avec une intensité lumineuse de 900 lumen. Les lampes d'un même étage d'acquisition sont réparties angulairement autour de l'axe X et sont chacune disposées entre deux caméras consécutives. Chaque lampe éclaire ainsi au moins une partie de la scène vue par les caméras entre lesquelles elle est disposée.

Par ailleurs, le module d'acquisition comporte des câbles électriques 35 reliant chaque caméra et chaque lampe à une unité d'alimentation.

La canne 12 est de préférence métallique, par exemple en alliage d'aluminium, ou à base de fibres de carbone.

La canne présente un pied 40 à son extrémité inférieure, destiné à entrer en contact avec le sol. Le pied peut être muni d'un embout 45 antidérapant.

Dans l'exemple de la figure 1, la longueur de la canne est variable, de 0,30 m à 5m environ. Selon une variante non représentée, la canne est télescopique, de sorte que son pied peut être raccourci.

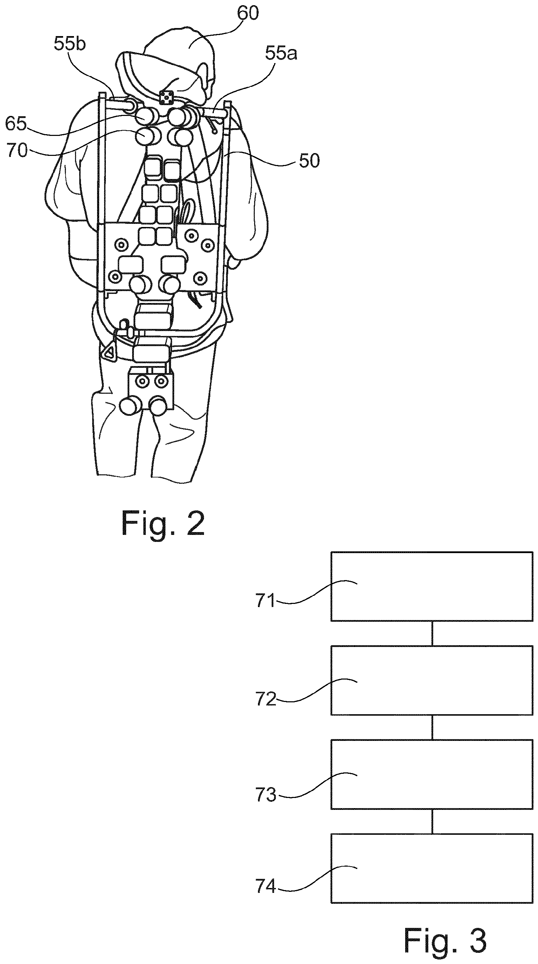

Le dispositif d'acquisition illustré sur la figure 1 peut en outre comporter un harnais. Comme illustré sur la figure 2, le harnais 50 comporte des sangles 55a-b pour être porté aux épaules d'un opérateur 60.

Le dispositif comporte en outre une pluralité de caméras arrière 65 et une pluralité de lampes arrière 70, qui sont montés sur le harnais.

Par ailleurs, le dispositif comporte une batterie, une mémoire de masse, par exemple un disque SSD, pour stocker les images et un déclencheur pour déclencher l'acquisition des images par les caméras du module d'acquisition et les caméras arrière. Comme cela est illustré sur la figure 2, le déclencheur, la batterie et le disque dur sont montés sur le harnais. On limite ainsi la masse du module d'acquisition en évitant d'y monter ces éléments, et notamment l'unité d'alimentation. La manipulation du module d'acquisition s'en trouve simplifiée.

La figure 3 représente de manière schématique les étapes du procédé selon l'invention. A l'étape a) 71, un ou plusieurs opérateurs déplacent un appareil d'acquisition, notamment tel que décrit ci-dessus, dans au moins une galerie et un regard d'une installation souterraine de façon à acquérir au moins une scène qui inclut un élément géoréférencé. Les images de chaque scène acquise sont ensuite stockées et sont traitées numériquement à l'étape b) 72, par exemple par photogrammétrie, pour créer un modèle 3D élémentaire de la scène. A l'étape c) 73, les modèles créés pour chaque scène sont alors assemblés pour réaliser un modèle 3D continu de la galerie et du regard. Puis, à l'étape d) 74, au moyen de la position préalablement géoréférencée, dans le référentiel absolu, de l'élément de référence, le modèle 3D continu de la galerie et du regard est géoréférencé.

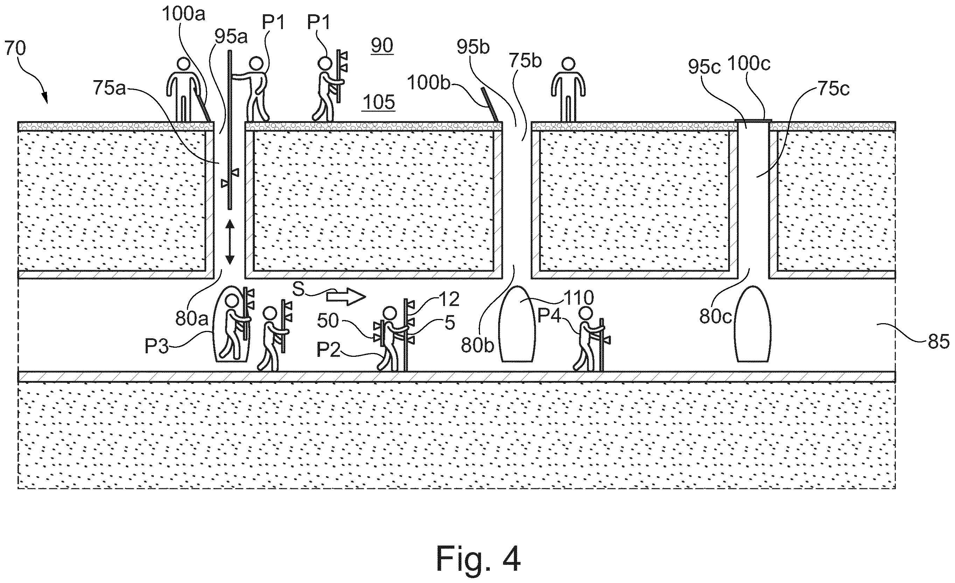

La figure 4 illustre de manière schématique un exemple de mise en oeuvre du dispositif selon l'invention pour acquérir des images de galeries et de regards d'un réseau d'égouts.

Le réseau d'égouts 70 comporte des regards 75a-c espacés les uns des autres et s'étendant verticalement. Chaque regard débouche, par sa portion inférieure, par un branchement de regard 80a-c respectif, dans une galerie 85 sensiblement horizontale, et à la surface 90 par un accès 95a-c respectif, qui peut être obturé par un trappon 100a-c de regard amovible.

Dans la configuration où le trappon obture l'accès, la position du trappon, de préférence son centre, est géoréférencée dans un référentiel absolu.

L'acquisition des images dans la galerie peut être effectuée de la façon suivante.

Un premier opérateur P1 positionne en plusieurs emplacements disposés à différentes hauteurs d'un des regards, un dispositif d'acquisition d'images, notamment un dispositif selon l'invention, et acquiert des ensembles d'images pour chaque emplacement du regard jusqu'au branchement de regard. En particulier, il prend des images d'au moins une scène comportant l'accès de manière à pouvoir recouper la position de l'accès dans le modèle 3D continu à générer à partir des images acquises, avec une position géoréférencée d'un élément de référence disposé dans l'accès, par exemple le centre du trappon dans la position où le trappon obture l'accès.

Un deuxième opérateur P2, situé sous le regard 75a dans la galerie, est équipé d'un dispositif selon l'invention. Il tient verticalement par une main la canne 12 du module d'acquisition 10 illustré par exemple sur la figure 1 et sur son dos le harnais 50 illustré sur la figure 2. Il se déplace le long d'un itinéraire en sens unique, comme indiqué par la flèche S, dans la galerie. Il se positionne en un emplacement de la galerie puis réalise une acquisition de la scène qu'il observe. A cette fin, il positionne la canne au sol en la tenant sensiblement verticalement, et de telle sorte que les caméras du module d'acquisition prennent des images de la scène qu'il observe. Conjointement, il déclenche l'acquisition des caméras arrière disposées dans son dos de manière à acquérir des images de la scène acquise à l'emplacement immédiatement précédent. Une fois l'acquisition effectuée, il se déplace en avançant dans la galerie jusqu'à un nouvel emplacement qu'il sait choisir de sorte que la scène qu'il y acquiert soit continue avec la scène précédemment acquise.

Le deuxième opérateur P2 peut poursuivre sa progression dans la galerie jusqu'au prochain branchement 80b de regard où il peut alors attendre que le premier opérateur effectue une acquisition d'images du regard correspondant. Une fois l'acquisition du regard 75b réalisée par le premier opérateur, le deuxième opérateur peut ainsi poursuivre son itinéraire et continuer l'acquisition des scènes de la galerie.

Le mode de mise en oeuvre présenté ci-dessus n'est pas limitatif. Par exemple, dans une variante, le même opérateur peut effectuer à la fois l'acquisition dans le regard et dans la galerie.

Par ailleurs, optionnellement, le premier opérateur P1 peut acquérir à la surface, de préférence au moyen du dispositif selon l'invention, des images d'au moins une scène d'une portion routière 105 reliant les accès 95a, 95b des deux regards 75a, 75b consécutifs pour générer une modélisation 3D continue de la portion routière.

Optionnellement, un troisième opérateur P3, équipé de tout dispositif d'acquisition adapté, par exemple le même que celui utilisé par ailleurs dans la galerie, peut acquérir uniquement des scènes qui se présentent aux croisements 110 entre les galeries de l'installation souterraine. Un quatrième opérateur P4 peut quant à lui relever optionnellement les coordonnées du fond de la cunette de la galerie.

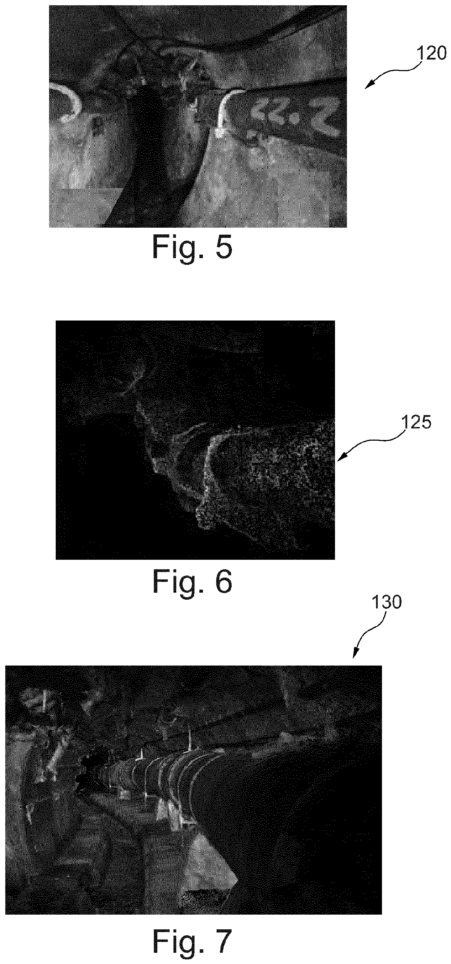

La figure 5 illustre une photographie 120 telle qu'acquise par une caméra du dispositif selon l'invention.

A l'étape b) 72 du procédé, l'ensemble des images acquises à un emplacement donné sont traitées par photogrammétrie. Un modèle 3D élémentaire comportant un ensemble de points de coordonnées représentatives de la scène est ainsi créé au moyen d'un traitement photogrammétrique des images.

La figure 6 est une vue 125 3D des coordonnées des points représentatifs de la scène après traitement photogrammétrique. En assemblant les modèles élémentaires, un modèle continu de la galerie est ainsi obtenu, tel que visualisé sur la représentation 130 de la figure 7.

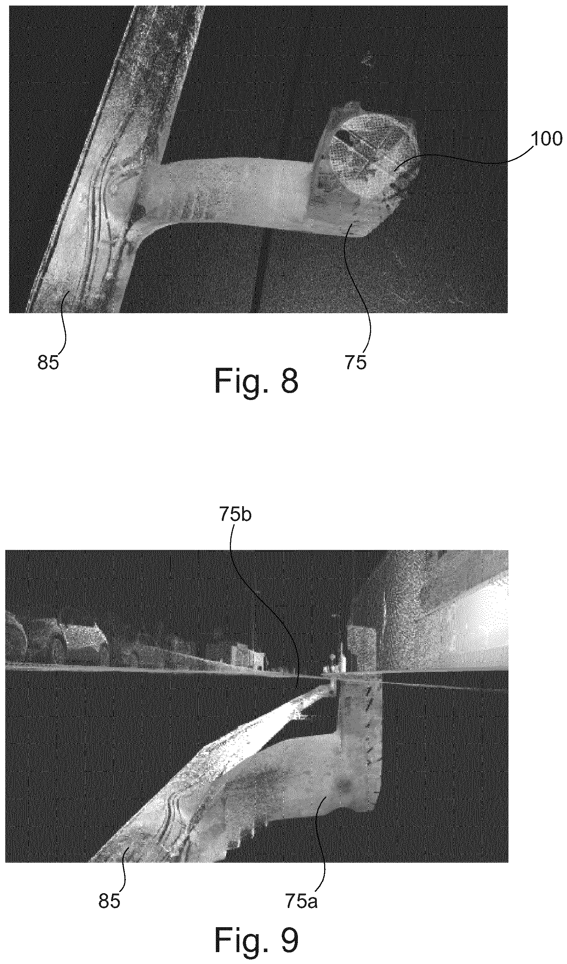

Comme cela a été décrit ci-dessus, le modèle 3D continu comporte les coordonnées géoréférencées du regard 75 et de la galerie 85. Sur la figure 8, on observe que les coordonnées des points représentatifs de la galerie et de l'accès sont précisément référencées par rapport au trappon 100 qui définit un élément de référence géoréférencé.

Enfin la figure 9 illustre un exemple de parfaite continuité entre un modèle 3D continu d'une galerie et de deux regards et la modélisation de la portion routière entre les deux regards obtenus selon un mode de mise en oeuvre du procédé selon l'invention.

Comme cela apparaît à la lecture de la présente description, le modèle 3D continu géoréférencé obtenu au moyen du procédé selon l'invention fournit un moyen fiable et précis pour planifier et optimiser les conditions d'intervention dans une installation souterraine.

Bien évidemment, l'invention n'est pas limitée aux modes de réalisation et modes de mise en oeuvre de l'invention décrits ci-dessus.

## Revendications

1. Dispositif (5) portatif pour acquérir des images d'un environnement, notamment d'une galerie (85), le dispositif comportant un module d'acquisition (10) comportant une canne (12) et au moins deux étages d'acquisition (25a-c) disposés à des hauteurs différentes sur la canne, chaque étage d'acquisition comportant une pluralité de caméras (20) configurées pour acquérir chacune une image de la scène, les axes de vue (27) des caméras d'un étage d'acquisition étant répartis angulairement autour de l'axe de la canne de sorte que les images acquises se recoupent angulairement, l'espacement (H_{ab}; H_{bc}) entre les étages d'acquisition étant réglable.

2. Dispositif selon la revendication 1, la canne étant adaptée à être portée par un opérateur (P2) se déplaçant dans l'environnement et comportant en partie inférieure un pied (40) permettant de la poser sur le sol.

3. Dispositif selon l'une quelconque des revendications 1 et 2, la canne comportant au moins trois, de préférence trois étages d'acquisition, et/ou au moins un, de préférence tous les étages d'acquisition comportant chacun un boîtier (15a-c) dans lequel les caméras de l'étage d'acquisition sont logées, les boîtiers étant de préférence à distance les uns des autres

4. Dispositif selon l'une quelconque des revendications précédentes, les caméras de chaque étage étant réparties autour de l'axe longitudinal de la canne, sur un secteur angulaire total compris entre 90° et 210°, de préférence compris entre 150° et 190°, en particulier égal à 180°.

5. Dispositif selon l'une quelconque des revendications précédentes, les caméras d'un étage d'acquisition étant fixes les unes par rapport aux autres et/ou le module d'acquisition comportant au moins six, de préférence au moins dix, de préférence au moins douze, notamment quinze caméras.

6. Dispositif selon l'une quelconque des revendications précédentes, le module d'acquisition comportant une pluralité de lampes (30) pour éclairer la scène.

7. Dispositif selon l'une quelconque des revendications précédentes, le module d'acquisition présentant une masse inférieure à 15 kg, mieux inférieure à 10 kg.

8. Dispositif selon l'une quelconque des revendications précédentes, comportant en outre une unité d'alimentation électrique, de préférence comportant une batterie rechargeable, pour alimenter électriquement le module d'acquisition, en particulier pour alimenter électriquement les caméras et le cas échéant les lampes et/ou l'unité de déclenchement, et/ou
comportant un organe de fixation pour monter le dispositif sur un véhicule.

9. Dispositif selon l'une quelconque des revendications précédentes, comportant un harnais (50), adapté à être porté par l'opérateur lors du déplacement du module d'acquisition dans l'environnement, et une pluralité de caméras arrière (65) montées sur le harnais, les caméras arrière étant de préférence disposées de telle sorte que lorsque le harnais est porté par l'opérateur et que ce dernier regarde devant lui, les axes de vue des caméras arrière soient orientés selon une direction opposée à la direction d'observation de l'opérateur.

10. Méthode d'acquisition d'une scène, notamment d'au moins une galerie, de préférence d'une galerie d'une installation souterraine, comportant une étape d'acquisition selon laquelle on positionne la canne selon une direction sensiblement verticale, puis on déclenche l'acquisition d'au moins une scène au moyen du dispositif d'acquisition selon l'une quelconque des revendications précédentes, la méthode comportant de préférence le déplacement du dispositif en une pluralité d'emplacements, et en chaque emplacement, la mise en oeuvre de l'étape d'acquisition, les emplacements étant disposés de sorte que les scènes acquises en deux emplacements consécutifs se recoupent.

11. Procédé de réalisation d'un modèle numérique 3D géoréférencé, dans un référentiel absolu, d'une installation souterraine,
l'installation souterraine comportant au moins une galerie souterraine et au moins un regard débouchant inférieurement dans la galerie et à la surface par un accès, le procédé comportant les étapes de :
a) déplacement (71) dans la galerie et le regard d'au moins un dispositif d'acquisition d'images, de préférence un dispositif selon l'une quelconque des revendications 1 à 9, avec au cours du déplacement du dispositif, l'acquisition de scènes se recoupant, au moins une scène incluant au moins un élément de référence géoréférencé dans le référentiel absolu situé au niveau de l'accès ou introduit dans le regard,
b) création (72) d'un modèle élémentaire 3D de chaque scène imagée par le dispositif,
c) assemblage (73) des modèles élémentaires 3D pour réaliser un modèle 3D continu de la galerie et du regard,
d) géoréférencement (74) dans le référentiel absolu du modèle 3D continu grâce à la position préalablement géoréférencée, dans le référentiel absolu, dudit élément de référence.

12. Procédé selon la revendication précédente, selon lequel à l'étape a) on déplace le dispositif d'acquisition dans plusieurs galeries interconnectées et/ou dans plusieurs regards débouchant inférieurement dans la ou les galeries et en surface par des accès espacés les uns des autres.

13. Procédé selon l'une quelconque des revendications 11 et 12, selon lequel à l'étape a) on acquiert au moins deux scènes incluant chacune au moins un élément de référence géoréférencé dans le référentiel absolu et situé au niveau de chacun des deux accès respectifs ou introduit dans chacun des deux regards respectifs, et de préférence le géoréférencement à l'étape d) du modèle 3D continu est opéré grâce aux positions préalablement géoréférencées, dans le référentiel absolu, d'au moins un mieux de plusieurs desdits éléments de référence.

14. Procédé selon l'une quelconque des revendications 11 à 13, la création de chaque modèle numérique élémentaire à l'étape b) étant effectuée par photogrammétrie, en corrélant numériquement plusieurs images, de préférence la totalité des images acquises à l'emplacement correspondant.

15. Procédé selon l'une quelconque des revendications 11 à 14, comportant la création d'une modélisation 3D continue d'une portion routière disposée entre deux regards et comportant les éléments de référence situés au niveau de chacun des deux accès correspondants ou introduits dans chacun des deux regards respectifs, et le géoréférencement d'une modélisation 3D continue de la portion routière dans un référentiel absolu.

16. Procédé selon l'une quelconque des revendications 11 à 15, le modèle 3D continu, obtenu en fin d'étape d), comportant un ensemble de points dont les coordonnées géométriques représentent virtuellement la galerie et l'accès, les coordonnées géométriques étant de préférence géoréférencées, dans le référentiel absolu, avec une précision inférieure à 20 mm, de préférence inférieure à 10 mm, par exemple de l'ordre de 5 mm.

17. Procédé selon l'une quelconque des revendications 11 à 16, l'installation souterraine étant choisie parmi un réseau d'égouts, une mine, un réseau ferré métropolitain, un réservoir d'eau potable et un autre ensemble industriel.
